(19) Europäisches Patentamt
European Patent Office
Office européen des brevets

(11) **EP 3 348 978 B1**

(12) **EUROPEAN PATENT SPECIFICATION**

(45) Date of publication and mention
of the grant of the patent:
**23.06.2021 Bulletin 2021/25**

(51) Int Cl.:
***G01K 7/12*** *(2006.01)*     ***G01K 7/13*** *(2006.01)*
***G01K 7/42*** *(2006.01)*

(21) Application number: **17196965.2**

(22) Date of filing: **18.10.2017**

(54) **TEMPERATURE MEASUREMENT DEVICE USING THERMOCOUPLE**

TEMPERATURMESSVORRICHTUNG MIT THERMOELEMENT

DISPOSITIF DE MESURE DE LA TEMPÉRATURE À L'AIDE D'UN THERMOCOUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2017 JP 2017003894**

(43) Date of publication of application:
**18.07.2018 Bulletin 2018/29**

(73) Proprietor: **Omron Corporation**
**Kyoto-shi, Kyoto 600-8530 (JP)**

(72) Inventors:
• **KUNIYASU, Yuki**
**Kyoto-shi, Kyoto 600-8530 (JP)**
• **MITSUMORI, Shinichi**
**Kyoto-shi, Kyoto 600-8530 (JP)**
• **SAKAGUCHI, Takashi**
**Kyoto-shi, Kyoto 600-8530 (JP)**

(74) Representative: **Becker & Kurig Partnerschaft**
**Patentanwälte PartmbB**
**Bavariastraße 7**
**80336 München (DE)**

(56) References cited:
**DE-A1-102013 109 809**     **JP-A- 2002 286 556**
**US-A1- 2014 379 290**

EP 3 348 978 B1

## Description

BACKGROUND OF THE INVENTION

Field of the Invention

The present invention relates to a technology for measuring a temperature by using a thermocouple.

Description of Related Art

When a temperature is measured by using a thermocouple, there is a need to measure a cold junction temperature of the thermocouple by using a temperature sensor different from the thermocouple in addition to a temperature difference between a cold junction and a temperature measurement junction measured by the thermocouple. For example, among conventional temperature measurement devices, a temperature measurement device in which a connection terminal corresponding to a cold junction of a thermocouple is provided in a casing and a temperature sensor measuring a temperature of the connection terminal (the cold junction) is provided inside the casing is known (for example, see Patent Document 1).

[Prior Art Documents]

[Patent Documents]

[Patent Document 1] Japanese Unexamined Patent Application Publication No. 2001-124636

DE 10 2013 109809 A1 discloses a method for determining the reference temperature of a thermocouple, wherein a reference temperature present in a housing is used for determining the reference temperature, and wherein a temperature difference between the reference temperature and the reference temperature is determined.

JP 2002 286556 A relates to improved determination of a terminal temperature of a cold junction in a temperature detecting device using a thermocouple to realize highly precise temperature measurement, and facilitate maintenance.

SUMMARY OF THE INVENTION

However, in this conventional temperature measurement device, since the temperature sensor measuring the cold junction temperature is thermally influenced by heat generating components (a power supply and the like) inside the casing, the measured cold junction temperature may be different from an actual cold junction temperature. Further, since the temperature measurement device is used while being assembled to a host apparatus, the temperature measurement device can be easily damaged when there is a heat influence from heat generating components inside the host apparatus.

Here, an object of the invention is to provide a technology capable of improving an accuracy of temperature measurement using a thermocouple and managing an external temperature of a casing.

A temperature measurement device using a thermocouple according to the invention is defined as in claim 1, and it has the thermocouple externally connected thereto and includes a casing provided with a cold junction of the thermocouple, a first temperature sensor, a second temperature sensor, and a control unit. The first temperature sensor is disposed in a vicinity of the cold junction inside the casing and measures a cold junction temperature of the thermocouple. The second temperature sensor is disposed at a position different from the first temperature sensor inside the casing and measures an internal temperature of the casing. Then, the control unit calculates an external temperature of the casing on the basis of the cold junction temperature measured by the first temperature sensor and the internal temperature measured by the second temperature sensor.

According to the temperature measurement device, since the internal temperature of the casing is detected by the second temperature sensor and an influence of the internal temperature on the first temperature sensor is considered, it is possible to predict a temperature closer to an actual cold junction temperature than the cold junction temperature measured by the first temperature sensor as the cold junction temperature of the thermocouple. Further, it is possible to acquire the external temperature of the casing without additionally providing a temperature sensor at the outside of the casing by calculating the external temperature of the casing on the basis of the cold junction temperature and the internal temperature.

In the temperature measurement device, it is desirable that the second temperature sensor is disposed in the vicinity of a heat generating component inside the casing. According to this configuration, since heat generated from the heat generating component can be easily transmitted to the second temperature sensor, a thermal influence of the heat generating component is reflected in the internal temperature measured by the second temperature sensor. Since such an internal temperature is used to predict the actual cold junction temperature, it is easy to exclude the thermal influence from the heat generating component and thus to acquire a temperature closer to the actual cold junction temperature than the cold junction temperature measured by the first temperature sensor.

In the temperature measurement device, the control unit calculates the external temperature by using a difference between the cold junction temperature and the internal temperature.

In the temperature measurement device, it is desirable that the control unit performs a notification using a notification unit in at least one of a case where the calculated external temperature is equal to or higher than a first threshold value and a case where the calculated external temperature is equal to or lower than a second threshold value. According to this configuration, since the first threshold value or the second threshold value is set to an appropriate value, it is possible to notify abnormality even when the temperature of the temperature measurement device is likely to be outside of or actually outside of an appropriate temperature range (for example, a rated temperature range) due to a certain influence.

In the temperature measurement device, the control unit can calculate a temperature measurement junction temperature of the thermocouple by adding a temperature difference between the cold junction and a temperature measurement junction acquired from an input value from the thermocouple to the calculated external temperature of the casing. According to this configuration, since it is possible to commonize the external temperature calculation process and the cold junction temperature calculation process (for example, a correction process) used to calculate the temperature measurement junction temperature, the control of the temperature measurement device is simplified.

According to the invention, it is possible to improve the accuracy of temperature measurement using the thermocouple and to manage the external temperature of the casing.

BRIEF DESCRIPTION OF THE DRAWINGS

FIG. 1 is a conceptual diagram showing a temperature controller according to an embodiment of the invention.
FIG. 2 is a flowchart showing an external temperature calculation process performed by a control unit of the temperature controller.
FIG. 3 is a flowchart showing a notification process performed by the control unit of the temperature controller.

DESCRIPTION OF THE EMBODIMENTS

Hereinafter, a temperature controller according to an embodiment of the invention will be described in detail.

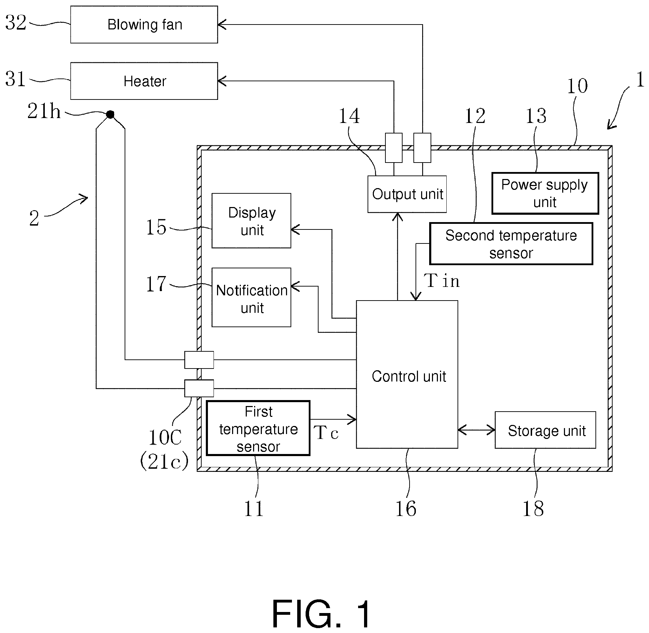

FIG. 1 is a conceptual diagram showing a temperature controller 1 according to an embodiment. In this embodiment, the temperature controller 1 has a thermocouple 2 externally connected thereto and controls a temperature of a temperature control target (in this embodiment, a heating target which is a heater 31) while measuring the temperature of the temperature control target with the thermocouple 2. As shown in FIG. 1, the temperature controller 1 includes a casing 10, a first temperature sensor 11, a second temperature sensor 12, a power supply unit 13, an output unit 14, a display unit 15, a control unit 16, a notification unit 17, and a storage unit 18.

The casing 10 is provided with a connection terminal 10C to which the thermocouple 2 is connected to form a cold junction 21c of the thermocouple 2. Further, the thermocouple 2 does not need to be connected to the connection terminal 10C and may be directly connected to, for example, a circuit board disposed inside the casing 10. In this case, a position connected to the circuit board becomes the cold junction 21c of the thermocouple 2. That is, the cold junction 21c of the thermocouple 2 may be disposed inside the casing 10 instead of outside of the casing 10.

The first temperature sensor 11 is disposed in the vicinity of the cold junction 21c (in this embodiment, the connection terminal 10C) inside the casing 10 and measures a cold junction temperature Tc of the thermocouple 2. In this embodiment, the first temperature sensor 11 measures the temperature of the connection terminal 10C as the cold junction temperature Tc. For example, various temperature sensitive elements such as a diode can be used in the first temperature sensor 11. Further, when the first temperature sensor 11 is thermally influenced by a heat generating component like the power supply unit 13 or the output unit 14, the cold junction temperature Tc measured by the first temperature sensor 11 becomes a value larger than an actual cold junction temperature Tc0.

The second temperature sensor 12 is disposed at a position different from the first temperature sensor 11 inside the casing 10 and measures the internal temperature Tin of the casing 10. Specifically, the second temperature sensor 12 is provided at a position where a temperature easily increases inside the casing 10. Further, as will be described later, it is desirable to dispose the second temperature sensor 12 in the vicinity of a heat generating component like the power supply unit 13 or the output unit 14 in order to improve the calculation accuracy of the external temperature Tout. For example, various temperature sensitive elements such as a diode can be used in the second temperature sensor 12.

The power supply unit 13 supplies electric power to the components of the temperature controller 1. As an example, the power supply unit 13 includes a converting circuit which converts an AC voltage from a commercial power supply connected to the temperature controller 1 into a desired DC voltage.

The output unit 14 is connected to an external device like the heater 31 or the blowing fan 32 and can control the external device in response to an instruction of the control unit 16. Specifically, the output unit 14 includes an output circuit with a relay or a transistor and the external device is controlled by the output circuit when the control unit 16 controls the output circuit.

The display unit 15 is provided in the temperature controller 1 while its display surface is exposed to the outside of the casing 10 (for example, the front surface). For example, the display unit 15 displays the measurement results of the thermocouple 2 or the external temperature Tout of the casing 10 to be described later.

The control unit 16 is disposed inside the casing 10 and controls the output unit 14 on the basis of the measurement results of the thermocouple 2, thereby controlling the external device through the output unit 14. As an example, as shown in FIG. 1, the heater 31 is connected to the output unit 14 and the temperature of the heater 31 is measured by the thermocouple 2. In this case, the control unit 16 can control the heater 31 through the output unit 14 so that the temperature of the heater 31 becomes a desired temperature. Further, the blowing fan 32 may be further connected to the output unit 14. In this case, the control unit 16 can control the blowing fan 32 through the output unit 14 to forcedly decrease the temperature of the heater 31.

Further, a process (including a calculation process or the like to be described later) performed by the control unit 16 can be performed by, for example, a control processing device (not shown) such as a CPU (Central Processing Unit) or a microcomputer. Further, the process may be realized by executing a corresponding program using the temperature controller 1. Then, the same program may be stored in a storage medium (for example, a flash memory) or the storage unit 18 in a readable state.

According to the invention, the control unit 16 further calculates the external temperature Tout of the casing 10 on the basis of the cold junction temperature Tc measured by the first temperature sensor 11 and the internal temperature Tin measured by the second temperature sensor 12. The control unit 16 calculates the external temperature Tout by applying the cold junction temperature Tc and the internal temperature Tin to Equation (1) below.

$$Tg = (Tin - Tc) \times \alpha + \beta$$

$$Tg = (Tin - Tc) \times \alpha + \beta$$

Equation (1) is used to calculate the external temperature Tout by correcting the cold junction temperature Tc thermally influenced by a heat generating component using the correction amount Tg. Further, the correction amount Tg is based on a difference between the internal temperature Tin and the cold junction temperature Tc. An interpolation equation acquired by a linear interpolation for the measurement data is used as an equation for calculating the external temperature Tout, and reference symbols $\alpha$ and $\beta$ respectively indicate a gradient and an intercept acquired by the linear interpolation. Further, an interpolation equation acquired by a polynomial interpolation for the measurement data may be used in an equation for calculating the external temperature Tout.

Specifically, the measurement temperature at a predetermined position outside the casing 10 and the cold junction temperature Tc and the internal temperature Tin corresponding to the measurement temperature are set as one set of measurement data and plural sets of the measurement data are acquired under at least two different conditions. Then, Equation (1) is acquired by performing a linear interpolation for the plural sets of measurement data. Further, according to the invention, a predetermined position (that is, a position at which the temperature is predicted by the calculated external temperature Tout) where the measurement temperature is measured is in the periphery of the casing 10. More specifically, it is desirable that the predetermined position be in the vicinity of the connection terminal 10C (for example, a position away from the connection terminal 10C by one to several cm).

As a condition for acquiring the measurement data, a different internal temperature Tin acquired by changing the internal heat generation amount (for example, the heat generation amount from a heat generating component) can be used. In this case, the measurement data is acquired under at least two conditions in which the internal temperature Tin is different and the interpolation equation is acquired from the measurement data.

Further, as a condition for acquiring actual measurement data, not only the internal temperatures Tin are different, but also the internal heat generation amount (for example, the heat generation amount from a heat generating component) which is maximum or minimum may be used. In this case, actual measurement data is acquired under two conditions in which the internal heat generation amount is different and the interpolation equation is acquired from the actual measurement data.

Then, the control unit 16 calculates the external temperature Tout by using the interpolation equation acquired from the actual measurement data. The interpolation equation used for calculating the external temperature Tout may be incorporated into a program or a program stored in the storage unit 18 may be read out and used by the control unit 16. Further, when the interpolation equation can be acquired from the actual measurement data based on a predetermined function (in the above-described example, a linear function), the predetermined function may be incorporated into a program in a form that allows the assignment of coefficients. In this case, the storage unit 18 stores only the coefficients of the interpolation equation acquired from the measurement data and the control unit 16 reads out the coefficients stored in the storage unit 18 and uses the coefficients at the time of calculating the external temperature Tout.

<External Temperature Calculation Process>

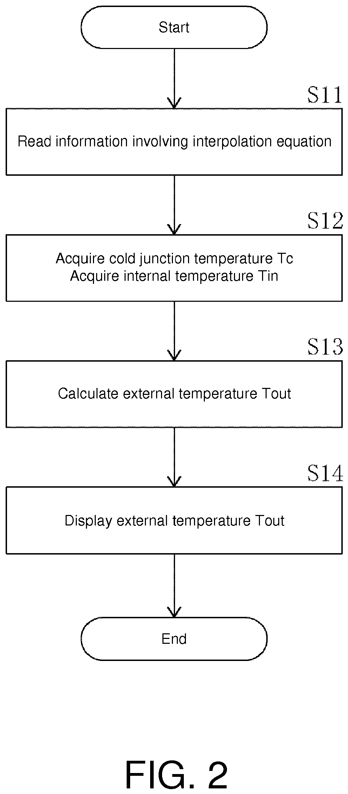

FIG. 2 is a flowchart showing a process of calculating the external temperature Tout performed by the control unit 16. First, the control unit 16 reads information involving the interpolation equation from the storage unit 18 (step S11). As described above, when the interpolation equation is stored in the storage unit 18, the interpolation equation is read by the control unit 16. Further, when only the coefficients of the interpolation equation are stored in the storage unit 18, the coefficients are read by the control unit 16. Meanwhile, when the interpolation equation is incorporated into a program, step S11 can be omitted.

Next, the control unit 16 acquires the cold junction temperature Tc from the first temperature sensor 11 and acquires the internal temperature Tin from the second temperature sensor 12 (step S12). Then, the control unit 16 calculates the external temperature Tout of the casing 10 by applying the cold junction temperature Tc and the internal temperature Tin to the interpolation equation (step S13). Subsequently, the control unit 16 displays the external temperature Tout on the display unit 15 (step S14). Further, the calculated external temperature Tout may be used in, for example, a notification process or the like to be described below while not being displayed on the display unit 15.

According to such a calculation process, it is possible to acquire the external temperature Tout without additionally providing a temperature sensor at the outside of the casing 10 by calculating the external temperature Tout on the basis of the cold junction temperature Tc and the internal temperature Tin. Thus, it is possible to perform management of the external temperature Tout of the casing 10 (for example, management using the notification process or the like to be described later). Then, the interpolation equation (for example, Equation (1)) used in the process of calculating the external temperature Tout can be acquired on the basis of the actual measurement data and thus differences from the actual measurement data are small. Thus, the external temperature Tout which can be acquired by the calculation process of the control unit 16 is accurate in that a difference from the actual temperature is small.

Further, since the internal temperature Tin is detected by the second temperature sensor 12 and the influence of the internal temperature Tin on the first temperature sensor 11 is considered, it is possible to predict a temperature closer to the actual cold junction temperature Tc0 than the cold junction temperature Tc measured by the first temperature sensor 11 as the cold junction temperature of the thermocouple 2 (for example, see a process of calculating the measurement temperature using the thermocouple to be described later). Thus, it is possible to improve the temperature measurement accuracy using the thermocouple 2.

Specifically, since the second temperature sensor 12 is disposed in the vicinity of a heat generating component inside the casing 10, heat is easily transmitted from the heat generating component to the second temperature sensor 12. For this reason, the thermal influence of the heat generating component is reflected in the internal temperature Tin measured by the second temperature sensor 12. When such an internal temperature Tin is used to predict the actual cold junction temperature Tc0, the thermal influence from the heat generating component is easily excluded. As a result, it is possible to acquire a temperature closer to the actual cold junction temperature Tc0 than the cold junction temperature Tc measured by the first temperature sensor 11.

<Notification Process>

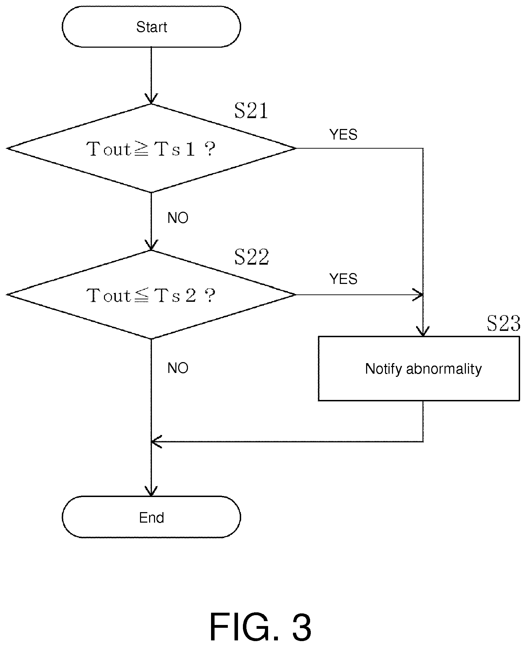

In this embodiment, the control unit 16 determines whether the external temperature Tout is abnormal and performs a notification using the notification unit 17 when it is determined that the external temperature is abnormal. Specifically, the notification is as below. Further, FIG. 3 is a flowchart showing a notification process performed by the control unit 16.

First, the control unit 16 determines whether the calculated external temperature Tout is equal to or higher than a first threshold value Ts1 (step S21). Then, when the control unit 16 determines that the "external temperature is equal to or higher than the first threshold value Ts1 (YES)", the notification unit 17 notifies that the external temperature Tout is abnormal (for example, lighting or blinking of a warning lamp, an output of a warning sound, etc.) (step S23).

Meanwhile, when the control unit 16 determines that the "external temperature is not equal to or higher than the first threshold value Ts1 (NO)", the control unit 16 determines whether the calculated external temperature Tout is equal to or lower than a second threshold value Ts2 (step S22). Then, when the control unit 16 determines that the "external temperature is equal to or lower than the second threshold value Ts2 (YES)", the notification unit 17 notifies that the external temperature Tout is abnormal (for example, lighting or blinking of a warning lamp, an output of a warning sound, etc.) (step S23). Meanwhile, when the control unit 16 determines that the "external temperature is not equal to or lower than the second threshold value Ts2 (NO)", the control unit 16 ends the notification process.

According to such a notification process, since the first threshold value Ts1 and the second threshold value Ts2 are set to appropriate values, it is possible to notify the abnormality even when the temperature of the temperature controller 1 is outside of an appropriate temperature range (for example, a rated temperature range) due to a certain influence. The temperature of the temperature controller 1 may excessively increase due to, for example, a thermal influence from a different device or a host device having the temperature controller 1 assembled thereto. In this case, since it is possible to allow a user to protect the temperature controller 1 from the thermal influence by performing a notification, it is possible to avoid or eliminate the abnormality in temperature of the temperature controller 1.

Further, the external temperature Tout may increase also when excess heat is generated from the temperature controller 1 due to a certain reason. Then, also in this case, it is possible to cause awareness of the abnormality of the temperature controller 1 by applying the notification process.

Further, in the notification process, the control unit 16 may perform a notification using the notification unit 17 only when the calculated external temperature Tout becomes equal to or higher than the first threshold value Ts1 or the calculated external temperature Tout becomes equal to or lower than the second threshold value Ts2.

<Process of Calculating Measurement Temperature using Thermocouple>

In the temperature controller 1, the control unit 16 may calculate the temperature (the temperature measurement junction temperature Th) of the temperature measurement junction 21h of the thermocouple 2 using the calculated external temperature Tout. Specifically, the control unit 16 can calculate the temperature measurement junction temperature Th by adding a temperature difference $\Delta T$ between the cold junction 21c and the temperature measurement junction 21h acquired from an input value from the thermocouple 2 to the external temperature Tout acquired by the above-described calculation process. Accordingly, since it is possible to commonize the process of calculating the external temperature Tout and the process (for example, the correction process) of calculating the cold junction temperature used to calculate the temperature measurement junction temperature Th, the control of the temperature controller 1 is simplified.

Here, when the first temperature sensor 11 is thermally influenced by a heat generating component like the power supply unit 13 or the output unit 14, the cold junction temperature Tc measured by the first temperature sensor 11 becomes a value larger than the actual cold junction temperature Tc0. For this reason, if the cold junction temperature Tc is directly used for the calculation of the temperature measurement junction temperature Th, the calculated temperature measurement junction temperature Th increases due to the thermal influence from the heat generating component. Here, when a position at which a temperature is predicted using the calculated external temperature Tout (that is, a predetermined position for acquiring the measurement data) is set in the vicinity of the cold junction 21c (in this embodiment, the connection terminal 10C), the calculated external temperature Tout becomes closer to the actual cold junction temperature Tc0 than the cold junction temperature Tc measured by the first temperature sensor 11. Thus, such an external temperature Tout is appropriate as the cold junction temperature used to calculate the temperature measurement junction temperature Th. That is, as the measurement temperature measured by the thermocouple 2, it is possible to acquire an accurate temperature close to the actual temperature measurement junction temperature Th0.

Further, the configuration of all of components of the temperature controller 1 is not limited to a temperature controller and can be applied to various temperature measurement devices using thermocouples. Further, in the temperature controller 1, the notification unit 17 may be externally connected to the temperature controller 1. Furthermore, each position of the first temperature sensor 11 and the second temperature sensor 12 inside the casing 10 can be appropriately changed in response to the position of the cold junction 21c or the position of the heat generating component.

[Explanation of Labels]

1 temperature controller; 2 thermocouple; 10 casing; 10C connection terminal; 11 first temperature sensor; 12 second temperature sensor; 13 power supply unit; 14 output unit; 15 display unit; 16 control unit; 17 notification unit; 18 storage unit; 21c cold junction; 21h temperature measurement junction; 31 heater ; 32 blowing fan; Tin internal temperature; Tout external temperature; Tc, Tc0 cold junction temperature; Th, Th0 temperature measurement junction temperature; Tg correction amount; Ts1 first threshold value; Ts2 second threshold value; S11 to S14, S23 steps.

**Claims**

1. A temperature measurement device (1) to which a thermocouple (2) is externally connected, comprising:

    a casing (10) provided with a cold junction (21c) of the thermocouple (2);
    a first temperature sensor (11) disposed in a vicinity of the cold junction (21c) inside the casing (10) and configured to measure a cold junction temperature (Tc) of the thermocouple (2); and
    a second temperature sensor (12) disposed at a position different from the first temperature sensor (11) inside the casing (10) and configured to measure an internal temperature (Tin) inside the casing (10), **characterized in that** the temperature measurement device (1) further comprises:

    a control unit (16) configured to calculate an external temperature (Tout) of the casing (10) by applying the cold junction temperature (Tc) measured by the first temperature sensor (11) and the internal temperature (Tin) measured by the second temperature sensor (12) to an interpolation equation including subtracting a correction amount (Tg) from the cold junction temperature (Tc), where the correction amount (Tg) is calculated by multiplying a difference between the internal temperature (Tin) and the cold junction temperature (Tc) by a gradient and adding an intercept, wherein
a measurement temperature measured at a predetermined position outside the casing (10) and a junction temperature (Tc) and an internal temperature (Tin) corresponding to the measurement temperature are set as one set of measurement data and plural sets of the measurement data are acquired under at least two different conditions,
the predetermined position is a position at which the temperature is predicted by the calculated external temperature (Tout) and is a position in the periphery of the casing (10), and
the control unit (16) is further configured to acquire the gradient and the intercept of the interpolation equation by performing a linear interpolation for the plural sets of measurement data using the interpolation equation.

2. The temperature measurement device (1) according to claim 1,
wherein the second temperature sensor (12) is disposed in a vicinity of a heat generating component (13) inside the casing (10).

3. The temperature measurement device (1) according to any one of claims 1 to 2,
wherein the control unit (16) is configured to perform a notification using a notification unit (17) in at least one of a case where the calculated external temperature (Tout) is equal to or higher than a first threshold value (Ts1) and a case where the calculated external temperature (Tout) is equal to or lower than a second threshold value (Ts2).

4. The temperature measurement device (1) according to any one of claims 1 to 3,
wherein the control unit (16) is configured to calculate a temperature measurement junction temperature (Th) of the thermocouple (2) by adding a temperature difference between a temperature measurement junction (21h) and the cold junction (21c) acquired from an input value from the thermocouple (2) to the calculated external temperature (Tout).

**Patentansprüche**

1. Temperaturmessvorrichtung (1), an die ein Thermopaar (2) extern angeschlossen ist, umfassend:

ein Gehäuse (10), das mit einer Vergleichsmessstelle (21c) des Thermopaars (2) bereitgestellt ist,
einen ersten Temperatursensor (11), der in einer Nähe der Vergleichsmessstelle (21c) innerhalb des Gehäuses (10) angeordnet ist und konfiguriert ist, um eine Vergleichsmessstellentemperatur (Tc) des Thermopaars (2) zu messen; und
einen zweiten Temperatursensor (12), der an einer von dem ersten Temperatursensor (11) verschiedenen Position innerhalb des Gehäuses (10) angeordnet ist und konfiguriert ist, um eine Innentemperatur (Tin) innerhalb des Gehäuses (10) zu messen, **dadurch gekennzeichnet, dass** die Temperaturmessvorrichtung (1) ferner umfasst
eine Steuereinheit (16), die konfiguriert ist, um eine Außentemperatur (Tout) des Gehäuses (10) zu berechnen, durch Anwenden der Vergleichsmessstellentemperatur (Tc), gemessen von dem ersten Temperatursensor (11) und die Innentemperatur (Tin), gemessen von dem zweiten Temperatursensor (12) zu einer Interpolationsgleichung, die Subtrahieren eines Korrekturbetrags (Tg) von der Vergleichsmessstellentemperatur (Tc) beinhaltet, wobei der Korrekturbetrag (Tg) durch Multiplizieren einer Differenz zwischen der Innentemperatur (Tin) und der Vergleichsmessstellentemperatur (Tc) mit einem Gradienten und Addieren eines Abschnitts berechnet wird, wobei
eine Messtemperatur, die an einer vorbestimmten Position außerhalb des Gehäuses (10) gemessen wird, und eine Messstellentemperatur (Tc) und eine Innentemperatur (Tin), entsprechend der Messtemperatur, als ein Satz von Messdaten eingestellt werden und mehrere Sätze der Messdaten unter mindestens zwei verschiedenen Bedingungen erfasst werden,
die vorbestimmte Position eine Position ist, an der die Temperatur durch die berechnete Außentemperatur (Tout) vorhergesagt wird, und eine Position in der Peripherie des Gehäuses (10) ist, und
die Steuereinheit (16) ferner konfiguriert ist, um den Gradienten und den Abschnitt der Interpolationsgleichung zu erfassen, durch Durchführen einer linearen Interpolation für die mehreren Sätze von Messdaten unter Verwendung der Interpolationsgleichung.

2. Temperaturmessvorrichtung (1) gemäß Anspruch 1, wobei der zweite Temperatursensor (12) in der Nähe einer wärmeerzeugenden Komponente (13) innerhalb des Gehäuses (10) angeordnet ist.

3. Temperaturmessvorrichtung (1) gemäß irgendeinem der Ansprüche 1 bis 2,
wobei die Steuereinheit (16) konfiguriert ist, um eine Benachrichtigung unter Verwendung einer Benachrichtigungseinheit (17) in mindestens einem von einem Fall, in dem die berechnete Außentemperatur (Tout) gleich oder höher als ein erster Schwellenwert (Tsl) ist, und einem Fall, in dem die berechnete Außentemperatur (Tout) gleich oder niedriger als ein zweiter Schwellenwert (Ts2) ist, durchzuführen.

4. Temperaturmessvorrichtung (1) gemäß irgendeinem der Ansprüche 1 bis 3,
wobei die Steuereinheit (16) konfiguriert ist, um eine Temperaturmessungs-Messstellentemperatur (Th) des Thermopaars (2) zu berechnen, durch Addieren einer Temperaturdifferenz zwischen einer Temperaturmessungs-Vergleichsmessstelle (21h) und der Vergleichsmessstelle (21c), die aus einem Eingangswert von dem Thermopaar (2) gewonnen wird, zu der berechneten Außentemperatur (Tout).

**Revendications**

1. Dispositif de mesure de température (1) auquel un thermocouple (2) est connecté extérieurement, comprenant :

     un boîtier (10) pourvu d'une jonction froide (21c) du thermocouple (2) ;
     un premier capteur de température (11) disposé à proximité de la jonction froide (21c) à l'intérieur du boîtier (10) et configuré pour mesurer une température de jonction froide (Tc) du thermocouple (2) ; et
     un deuxième capteur de température (12) disposé à une position différente du premier capteur de température (11) à l'intérieur du boîtier (10) et configuré pour mesurer une température interne (Tin) à l'intérieur du boîtier (10), **caractérisé en ce que** le dispositif de mesure de température (1) comprend en outre :

     une unité de commande (16) configurée pour calculer une température externe (Tout) du boîtier (10) par l'application de la température de jonction froide (Tc) mesurée par le premier capteur de température (11) et de la température interne (Tin) mesurée par le deuxième capteur de température (12) à une équation d'interpolation incluant la soustraction d'une quantité de correction (Tg) à la température de jonction froide (Tc), où la quantité de correction (Tg) est calculée par la multiplication d'une différence entre la température interne (Tin) et la température de jonction froide (Tc) par un gradient et l'ajout d'une ordonnée à l'origine, dans lequel
     une température de mesure mesurée à une position prédéterminée à l'extérieur du boîtier (10) et une température de jonction (Tc) et une température interne (Tin) correspondant à la température de mesure sont définies en tant qu'un jeu de données de mesure et plusieurs jeux des données de mesure sont acquis dans au moins deux conditions différentes,
     la position prédéterminée est une position à laquelle la température est prédite par la température externe calculée (Tout) et est une position à la périphérie du boîtier (10), et
     l'unité de commande (16) est en outre configurée pour acquérir le gradient et l'ordonnée à l'origine de l'équation d'interpolation par la réalisation d'une interpolation linéaire pour les plusieurs jeux de données de mesure en utilisant l'équation d'interpolation.

2. Dispositif de mesure de température (1) selon la revendication 1,
dans lequel le deuxième capteur de température (12) est disposé à proximité d'un composant de génération de chaleur (13) à l'intérieur du boîtier (10).

3. Dispositif de mesure de température (1) selon la revendication 1 ou 2,
dans lequel l'unité de commande (16) est configurée pour effectuer une notification en utilisant une unité de notification (17) dans au moins l'un d'un cas dans lequel la température externe (Tout) calculée est supérieure ou égale à une première valeur de seuil (Ts1) et d'un cas dans lequel la température externe (Tout) calculée est inférieure ou égale à une deuxième valeur de seuil (Ts2).

4. Dispositif de mesure de température (1) selon l'une quelconque des revendications 1 à 3,
dans lequel l'unité de commande (16) est configurée pour calculer une température de jonction de mesure de température (Th) du thermocouple (2) par l'ajout d'une différence de température entre une jonction de mesure de température (21h) et la jonction froide (21c) acquise à partir d'une valeur d'entrée du thermocouple (2) à la température externe (Tout) calculée.

FIG. 1

```
                    ┌──────────────────┐
                    │      Start        │
                    └──────────────────┘
                             │
                             ▼               S11
        ┌──────────────────────────────────────────┐
        │  Read information involving interpolation  │
        │                equation                    │
        └──────────────────────────────────────────┘
                             │
                             ▼               S12
        ┌──────────────────────────────────────────┐
        │      Acquire cold junction temperature Tc  │
        │        Acquire internal temperature Tin    │
        └──────────────────────────────────────────┘
                             │
                             ▼               S13
        ┌──────────────────────────────────────────┐
        │      Calculate external temperature Tout   │
        └──────────────────────────────────────────┘
                             │
                             ▼               S14
        ┌──────────────────────────────────────────┐
        │      Display external temperature Tout     │
        └──────────────────────────────────────────┘
                             │
                             ▼
                    ┌──────────────────┐
                    │       End         │
                    └──────────────────┘
```

# FIG. 2

Start

$$Tout \geqq Ts1 ?$$

S21

YES

NO

$$Tout \leqq Ts2 ?$$

S22

YES

S23

Notify abnormality

NO

End

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001124636 A
- DE 102013109809 A1
- JP 2002286556 A